# EUROPEAN PATENT SPECIFICATION

(11) **EP 4 438 988 B1**
(45) Date of publication and mention of the grant of the patent: **01.10.2025**
(21) Application number: 23164828.8
(22) Date of filing: 28.03.2023
(51) Int. Cl.: F28F 1/00

(54) **THE PRESENT INVENTION RELATES TO A HEAT EXCHANGER, PARTICULARLY, TO A BATTERY COOLER FOR COOLING BATTERIES IN ELECTRIC VEHICLE**
DIE VORLIEGENDE ERFINDUNG BETRIFFT EINEN WÄRMETAUSCHER, INSBESONDERE EINEN BATTERIEKÜHLER ZUM KÜHLEN VON BATTERIEN IN EINEM ELEKTROFAHRZEUG
ÉCHANGEUR DE CHALEUR, EN PARTICULIER REFROIDISSEUR DE BATTERIE POUR REFROIDIR DES BATTERIES DANS UN VÉHICULE ÉLECTRIQUE

(43) Date of publication of application: 02.10.2024
(73) Proprietor: VALEO SYSTEMES THERMIQUES, 78320 Le Mesnil Saint-Denis (FR)
(72) Inventor: FERNANDEZ, Roberto, 50011 Zaragoza (ES); JIMENEZ, Jesus, 50011 Zaragoza (ES); MALLEN, Alberto, 50011 Zaragoza (ES)
(74) Representative: Valeo Powertrain Systems

(56) References cited:
- EP-B1- 3 447 432
- WO-A1-2022/233526
- FR-A1- 3 125 636
- US-A1- 2014 090 823

## Description

### TECHNICAL FIELD

The present invention relates to a heat exchanger, particularly, to a battery cooler for cooling batteries in electric vehicle. More specifically, the present invention relates to a heat exchanger as defined in the preamble of claim 1, and as illustrated in FR 3 125 636.

### BACKGROUND

Generally, a battery cooler is a heat exchanger that includes a tube and a tank assembly. The tube is an extruded micro-channel tube formed with multiple channels for flow of coolant there through. The tank assembly is formed by joining a pair of panels. The extruded tube, particularly extreme end portions of the extruded tube are received and joined to the respective tank assemblies. The portion of the tube between the end portions follow a wave pattern, so that when multiple tubes with respective tank assemblies are disposed adjacent to one another along a first direction in spaced apart configuration, battery-accommodating spaces for receiving the batteries to be cooled are formed between crests of adjacent tubes. The tank assembly receives pressurized fluid, particularly, coolant and either distributes the coolant to or collects the coolant from the tube. The connection between the extruded tube and the tank assembly is required to be secure and air tight to prevent any leakage of the coolant from the interface between the tube and the tank assembly. Generally, the tube is joined to the tank assembly by a joining process such as brazing. However, the brazing of the microchannel tube to the tank assembly is a problem. The inherent heating of the microchannel tube during the brazing process, is detrimental to the mechanical properties, particularly, the mechanical resistance of the microchannel tubes. Furthermore, the entire microchannel tube is unnecessarily heated in the brazing furnace wherein only the ends of the microchannel tube should be subjected to heating for brazing for securely connecting the ends of the microchannel tube to the tank. There are further disadvantages of subjecting the entire microchannel tube to brazing in brazing furnace, for example, there is wastage of energy and need for larger brazing furnaces when the entire microchannel tubes are subjected to the brazing in the brazing furnace. Further, the brazing process involves other problems such as CO₂ emissions that renders the working environment hazardous for workers and causes harm to the environment. Further, brazing requires furnaces, jigs and fixtures and is uneconomical.

Generally, the tank assembly and tube are welded by fillet joint, wherein melted material from the tank is fused with the tube for forming the connection. Also, a gap is created at the triple point inherently formed at the interface between extruded tube and the pair of panels at the lateral corners of the tank assembly. The gap is required to be filled and blocked to prevent coolant leakage between the tube and the tank assembly. However, the conventional joining processes such as fillet joint welding process and filler wire process fail to provide economic and convenient solution for filling the gap. Particularly, the filler wire process renders the joining process slow and is inconvenient. Such gap may lead to leakage of the coolant through the gap between the tube and the tank assembly, thereby causing loss of coolant and hot spots in the battery cooler due to insufficient coolant supply. The insufficient coolant flow through the tube due to leakage of coolant may cause inefficient cooling of the batteries. The inefficient cooling of the batteries will adversely impact efficiency and performance of the batteries and eventually lead to battery failure and reduced service life of the batteries due to battery over-heating. Furthermore, the thinner sections of the tube are prone to joining defects and damage when subject to fusion joining that could further aggravate the problems of leakages due to joining defects.

According, there is a need for a heat exchanger, particularly, a battery cooler that involves a joining method that obviates the drawbacks of convention joining processes such as brazing for forming connection between the tube and the tank assembly. More specifically, there is a need for a heat exchanger that involves a joining method that is quick and efficient. Another object of the present invention is to provide a heat exchanger that ensures robust, secure and air tight connection between the tube and the tank assembly to prevent coolant leakage, thereby avoiding frequent refilling of the coolant. Further, there is need for a heat exchanger that exhibits improved efficiency and performance compared to conventional heat exchangers, thereby preventing battery failure due to overheating thereof accordingly reducing maintenance and improving service life of the batteries cooled thereby. Furthermore, there is a need for a heat exchanger that avoids welding defects.

### SUMMARY

A heat exchanger is disclosed in accordance with an embodiment of the present invention. The heat exchanger includes a tank assembly and a tube. The tank assembly is formed by joining a pair of panels. The tube includes a plurality of channels. The tube is received and joined to the tank assembly. At least one of the extreme end portions of the tube is having at least one of the lateral walls comparatively thicker than longitudinal walls and channel walls of the tube.

The longitudinal walls are extending along the width of the tube and the lateral walls are orthogonal to and connecting the longitudinal walls.

Preferably, the tube is joined to the tank assembly by laser welding.

Generally, the tube and the tank assembly are of aluminum alloy.

Generally, the panels are formed by stamping and are having thickness in the range of 0.7 - 0.9 mm.

Further, the longitudinal walls and the channel walls are having thickness in the range of 0.2 to 0.4 mm, while lateral walls of the extreme end portions of the tube is having thickness in the range of 0.5 to 0.6 mm.

According to the invention, thicker sections of the lateral wall of the tube is adapted to melt and fuse with tank assembly during welding and fill the gap at the triple point inherently formed at the interface between the tube and the pair of panels.

In accordance with an embodiment of the present invention, at least one of the extreme end portions of the tube is formed with a rib on at least one of the lateral walls thereof.

More specifically, both extreme end portions of the tube are having lateral walls comparatively thicker than the channel walls and longitudinal walls.

In accordance with another embodiment of the present invention, at least one of tank assembly and extreme end portions of the tube is formed with tabs to form crimping connection between the tank assembly and extreme end portions of the tube. The crimped tabs melt and fuse during welding to fill the gap at the triple point inherently formed at the interface between tube and the pair of panels.

In accordance with yet another embodiment of the present invention, the pair of panels includes inwardly bended ends that extend from tank assembly towards the tube received in the tank. The inwardly bended ends of the pair of panels melt and fuse during welding to fill the gap at the triple point inherently formed at the interface between tube and the pair of panels.

Further, at least one of the extreme end portions of at least one of the end channels is having outwardly facing lateral wall that is comparatively thicker than the channel walls and longitudinal walls.

Generally, the tube is either extruded tube or bended tube.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:

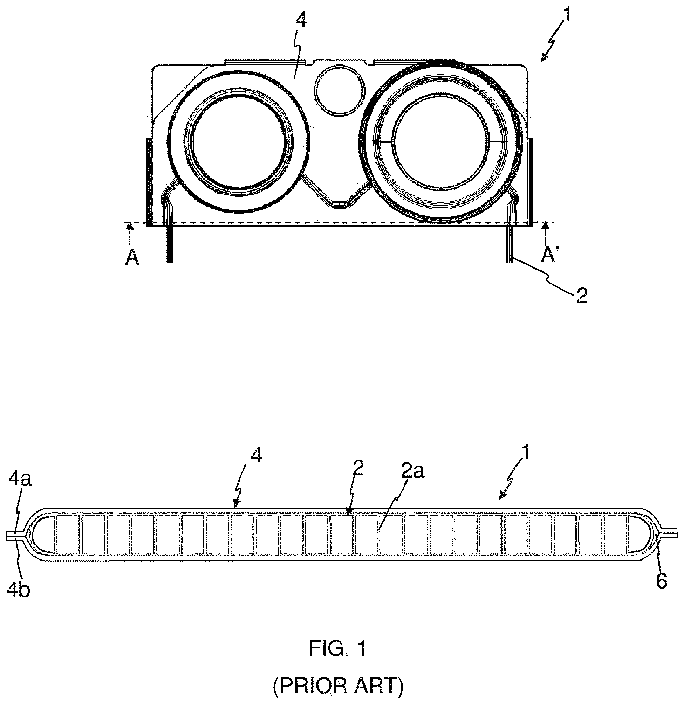

FIG.1 illustrates a front view of a conventional heat exchanger, particularly, a battery cooler, also is illustrated a sectional view of the battery cooler along section line A-A';
FIG.2 illustrates an isometric view of a portion of a heat exchanger, particularly, a battery cooler in accordance with an embodiment of the present invention;
FIG. 3 illustrates a front view of a heat exchanger, particularly, a battery cooler, also is illustrated a sectional view of the battery cooler along section line B-B';

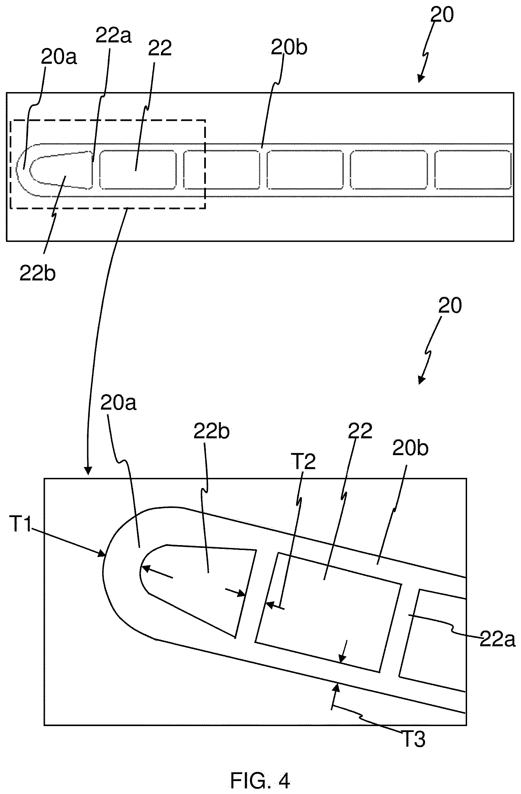

FIG. 4 illustrates an enlarged view of a portion of a tube, particularly, an extruded tube of the battery cooler of FIG. 2 depicting at least a portion of a lateral wall of the extruded tube being comparatively thicker than longitudinal walls and channel walls;
FIG. 5 illustrates an isometric view of an end portion of the extruded tube of FIG. 4, also is illustrated an enlarged view of the end portion;
FIG. 6 illustrates an enlarged view of an extruded tube of the battery cooler of FIG. 2 depicting a rib or a crimping tab formed on at least a portion of a lateral wall of the extruded tube.

FIG. 7 illustrates an enlarged view of a section of a battery cooler depicting at least a lateral wall of extruded tube being comparatively thicker and pair of panels forming the tank assembly includes inwardly bended ends.

### DETAILED DESCRIPTION

It must be noted that the figures disclose the invention in a detailed enough way to be implemented, said figures helping to better define the invention if needs be. The invention should however not be limited to the embodiment disclosed in the description.

Although, the present invention is explained with example of battery cooler, wherein the battery cooler includes a tank assembly and a tube, such as for example, an extruded tube, however, the present invention is applicable for any heat exchanger used in vehicular and non-vehicular environment, wherein it is required to configure secure and air tight connection between parts thereof, wherein at least one of the parts is made thicker by providing additional material for filling the gap at the triple point inherently formed at the interface between the parts to be joined by joining process. The tank assembly is formed by joining a pair of panels. The extruded tube includes a plurality of channels. The extruded tube is received and joined to the tank assembly by a quick and efficient joining process such as for example laser welding. At least one of the extreme end portions of the extruded tube is having at least one of the lateral walls comparatively thicker than longitudinal walls and channel walls of the extruded tube. The thicker sections of the lateral walls of the extruded tube are fused during the laser welding and fill the gap at the triple point inherently formed at the interface between extruded tube and the pair of panels. Such secure and air tight connection between the tube and the tank assembly renders the heat exchanger efficient and improves the reliability service life thereof.

A conventional heat exchanger, for example, a battery cooler 1 includes a tube 2 and a tank assembly 4. The tube 2 is an extruded micro-channel tube formed with multiple channels for flow of coolant there through. The channels are defined by channel walls 2a. The tank assembly 4 is formed by joining a pair of panels 4a and 4b. The extruded tube 2, particularly extreme end portions of the extruded tube 2 are received and joined to the respective tank assemblies 4. Generally, the tank assembly 4 and the tube 2 are welded by fillet joint, wherein melted material from the tank 4 is melted and fused with the tube 2 for forming the connection. Also, a gap 6 is created at the triple point inherently formed at the interface between extruded tube 2 and the pair of panels 4a and 4b at the lateral corners of the tank assembly 4. The gap 6 is required to be filled and blocked to prevent coolant leakage between the tube 2 and the tank assembly 4. However, the conventional joining processes such as fillet joint welding process and filler wire process fail to provide economic and convenient solution for filling the gap 6. Particularly, the filler wire process renders the joining process slow and is inconvenient. Such gap 6 may lead to leakage of the coolant there through, thereby causing loss of coolant and hot spots in the battery cooler 1 due to insufficient coolant supply. The insufficient coolant flow through the tube 2 due to leakage of coolant may cause inefficient cooling of the batteries.

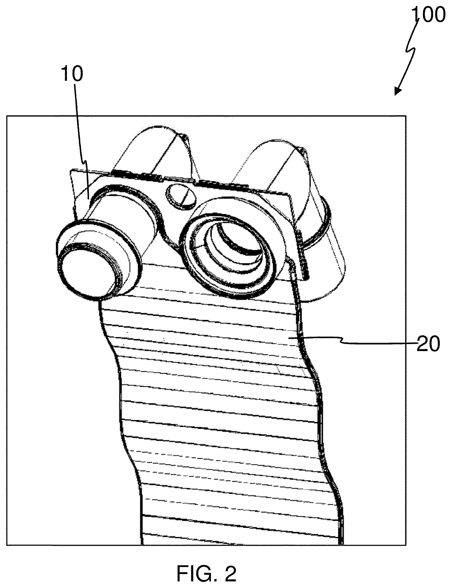

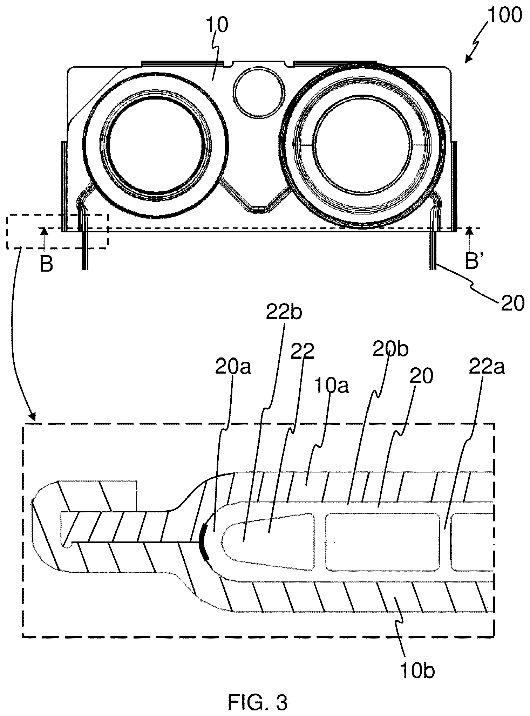

FIG. 2 illustrates an isometric view of a heat exchanger 100, particularly, a battery cooler, hereinafter referred to as battery cooler 100 in accordance with an embodiment of the present invention. Also is illustrated in FIG. 3 a sectional view of the battery cooler 100 depicting relative position and interaction between the various components of the battery cooler 100. The battery cooler 100 includes a tank assembly 10 and a tube, such as for example an extruded tube 20 and herein after referred to as extruded tube 20. Although, the forthcoming descriptions is explained with example of extruded tube, however, the present invention is not limited to extruded tubes but also applicable to tubes of other configuration such as for example, tubes formed by bending.

The tank assembly 10 is of aluminum alloy and is formed by joining a pair of panels 10a and 10b. The panels 10a and 10b are joined to define an enclosure with an opening. The panels 10a and 10b are formed by stamping and are having thickness in the range of 0.7 - 0.9 mm. The tank assembly 10 includes a pair of lateral sides defined by the panels 10a and 10b, a closed end and an open end. The panels 10a and 10b are joined by any of the joining process such as for example laser welding. The open end receives the extruded tube 20 and the extruded tube 20 is joined to the tank assembly 10 by laser welding. However, the present invention is not limited to any particular configuration of the tank assembly 10, the tank assembly 10 can be single piece component or can be configured by joining multiple components joined by laser welding that is quick and efficient.

The extruded tube 20 is of aluminum alloy. The extruded tube 20 includes a plurality of channels defined by channel walls 22. The extruded tube 20 is received and joined to the tank assembly 10 by laser welding. Particularly extreme end portions of the extruded tube 20 are received and joined to the tank assemblies 10. More specifically, the micro-channels follow either an I-pattern or U-pattern to configure either an I-flow or U-flow of the coolant. In case the I-flow configuration, opposite ends of the extruded tube are open and are received in separate tank assemblies 10. In case of U-flow configuration, open ends of the microchannel tubes are distributed in separate portions of a single tank assembly 10 defined a baffle disposed inside the single tank assembly 10 and dividing the interior of the tank assembly into different portions. The portion of the tube 20 between the end portions follow a wave pattern, so that when tubes 20 are disposed adjacent to one another along a first direction in spaced apart configuration, battery-accommodating spaces for receiving the batteries to be cooled are formed between crests of adjacent tubes 20.

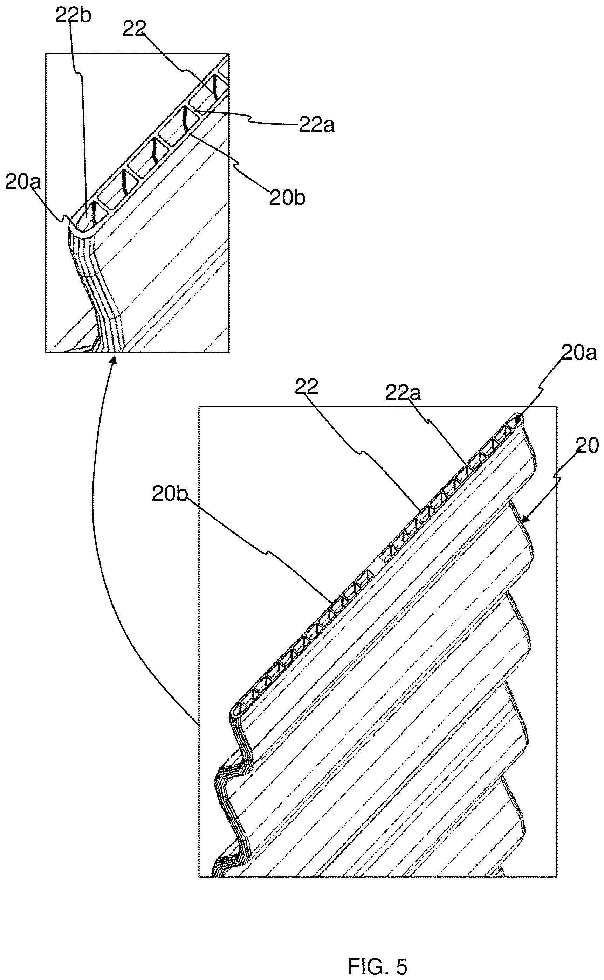

At least one of the extreme end portions of the extruded tube 20 is having at least one of lateral walls 20a thereof comparatively thicker than longitudinal walls 20b and channel walls 22a of the extruded tube 20. FIG. 5 illustrates an isometric view of an end portion of the extruded tube 20. The longitudinal walls 20b are extending along the width of the tube 20 and the lateral walls are orthogonal to and connecting the longitudinal walls 20b. More specifically, both extreme end portions of the extruded tube 20 are having lateral walls comparatively thicker than the channel walls 22a and the longitudinal walls 20b. Generally, the extruded tube 20 is formed by extrusion and the longitudinal walls 20b and the channel walls 22a are having thickness in the range of 0.2 to 0.4 mm, while the lateral walls 20a of the extreme end portions of extruded tube is having thickness in the range of 0.5 to 0.6 mm. Particularly, thicker sections of the lateral walls 20a of the extruded tube 20 is fused during the laser welding and fill the gap at the triple point inherently formed at the interface between extruded tube 20 and the pair of panels 10a and 10b.

In conventional heat exchangers, a gap 6 is created at the triple point inherently formed at the interface between extruded tube and the pair of panels. The gap is required to be filled and blocked to prevent coolant leakage between the tube 2 and the tank assembly 4. However, the conventional joining processes such as fillet joint welding process and filler wire process fail to provide economic and convenient solution for filling the gap. Particularly, the filler wire process renders the joining process slow and is slow and inconvenient. The coolant leakage through the gap causes loss of coolant and hot spots in the battery cooler due to insufficient coolant supply. The insufficient coolant flow through the tube 2 due to leakage of coolant may cause inefficient cooling of the batteries. The inefficient cooling of the batteries will adversely impact efficiency and performance of the batteries and eventually lead to battery failure and reduced service life of the batteries due to battery over-heating. Additional material may be provided on extreme end portions of the lateral walls 20a of the extruded tube 20 to fill the gap at the triple point inherently formed at the interface between extruded tube 20 and the pair of panels 10a and 10b to achieve secure and airtight connection between the tank assembly 10 and the extruded tube 20.

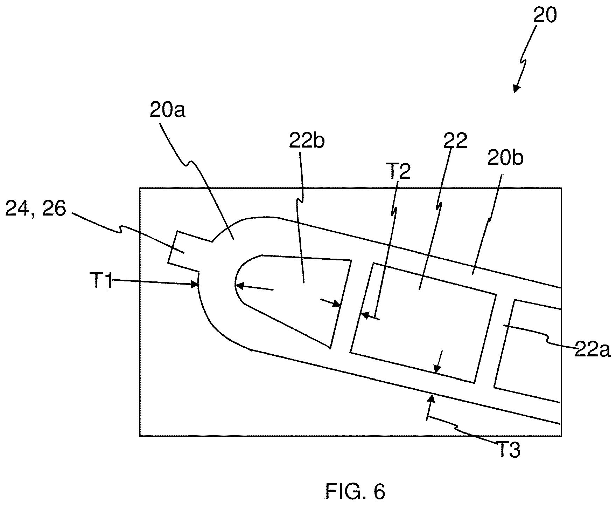

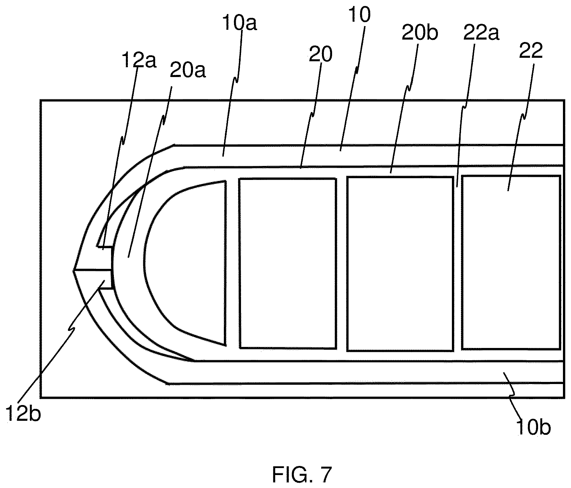

The present invention suggests providing additional material on extreme end portions of the lateral walls 20a of the extruded tube 20 in other different ways. In accordance with an embodiment of the present invention, at least one of the extreme end portions of the extruded tube 20 is formed with a rib 24 on at least one of the lateral walls thereof as illustrated in FIG. 6. In accordance with another embodiment of the present invention, at least one of tank assembly 10 and extreme end portions of the extruded tube 20 is formed with tabs 26 to form crimping connection between the tank assembly 10 and extreme end portions of the extruded tube 20 as illustrated in FIG. 6. Preferably, the crimping tab 26 extends from extreme end portions of the extruded tube 20. The crimped tabs 26 melt and fuse with the tank assembly 10 during welding to fill the gap at the triple point inherently formed at the interface between the extruded tube 20 and the pair of panels 10a and 10b. In accordance with yet another embodiment of the present invention, the pair of panels 10a and 10b includes inwardly bended ends 12a and 12b that extend from tank assembly 10 towards the tube 20 received in the tank assembly 10 as illustrated in FIG. 7. The bended ends 12a and 12b melt and fuse with the extruded tube 20 during welding to fill the gap at the triple point inherently formed at the interface between the extruded tube 20 and the pair of panels 10a and 10b.

Further, at least one of the extreme end portions of at least one of the end channels 22b is having outwardly facing lateral wall comparatively thicker than the channel walls 22a and the longitudinal walls 20b of the extruded tube 20.

In any case, the invention cannot and should not be limited to the embodiments specifically described in this document, as other embodiments might exist. The scope of protection is defined in the appended claims.

## Claims

1. A heat exchanger (100) comprising:
• a tank assembly (10) formed by joining a pair of panels (10a) and (10b);
• a tube (20) comprising a plurality of channels (22) and is adapted to be received and joined to the tank assembly (10),
**characterized in that** at least one of the extreme end portions of the tube (20) is having at least one of lateral walls (20a) comparatively thicker than longitudinal walls (20b) and channel walls (22a) of the tube (20), and wherein thicker sections of the lateral walls (20a) of the tube (20) is adapted to melt and fuse with the tank assembly (10) during welding and fill the gap at the triple point inherently formed at the interface between the tube (20) and the pair of panels (10a, 10b).

2. The heat exchanger (100) as claimed in the previous claim, wherein the tube (20) is joined to the tank assembly (10) by laser welding.

3. The heat exchanger (100) as claimed in any of the preceding claims, wherein the panels (10a) and (10b) are formed by stamping and are having thickness in the range of 0.7 - 0.9 mm.

4. The heat exchanger (100) as claimed in any of the preceding claims, wherein the longitudinal walls (20b) and the channel walls (22a) are having thickness in the range of 0.2 to 0.4 mm, while the lateral walls (20a) of the extreme end portions of the tube (20) is having thickness in the range of 0.5 to 0.6 mm.

5. The heat exchanger (100) as claimed in any of the preceding claims, wherein at least one of the extreme end portions of the tube (20) is formed with a rib on at least one of the lateral walls (20a) thereof.

6. The heat exchanger (100) as claimed in any of the preceding claims, wherein both extreme end portions of the tube (20) are having lateral walls comparatively thicker than the channel walls (22a) and the longitudinal walls (20b).

7. The heat exchanger (100) as claimed in any of the preceding claims, wherein at least one of the tank assembly (10) and extreme end portions of the tube (20) is formed with tabs to form crimping connection between the tank assembly (10) and extreme end portions of the tube (20), the crimped tabs are adapted to melt and fuse during welding to fill the gap at the triple point inherently formed at the interface between the tube (20) and the pair of panels (10a) and (10b).

8. The heat exchanger (100) as claimed in any of the preceding claims, wherein the pair of panels (10a) and (10b) comprises inwardly bended ends that extend from tank assembly (10) towards the tube (20) received in the tank assembly (10) and is adapted to melt and fuse during welding to fill the gap at the triple point inherently formed at the interface between the tube (20) and the pair of panels (10a) and (10b).

9. The heat exchanger (100) as claimed in any of the preceding claims, wherein at least one of the extreme end portions of at least one of the end channels (22b) is having outwardly facing lateral wall that is comparatively thicker than the channel walls (22a) and the longitudinal walls (20b).

10. The heat exchanger (100) as claimed in any of the preceding claims, wherein the tube (20) is either extruded tube or bended tube.

## Patentansprüche

1. Wärmetauscher (100), der Folgendes umfasst:
• eine Tankanordnung (10), die durch Verbinden eines Paares von Platten (10a) und (10b) gebildet ist;
• ein Rohr (20), das mehrere Kanäle (22) umfasst und dazu ausgelegt ist, von der Tankanordnung (10) aufgenommen und mit dieser verbunden zu sein,
**dadurch gekennzeichnet, dass** mindestens einer der äußersten Endabschnitte des Rohrs (20) mindestens eine von Seitenwänden (20a) aufweist, die vergleichsweise dicker als Längswände (20b) und Kanalwände (22a) des Rohrs (20) sind, und wobei dickere Abschnitte der Seitenwände (20a) des Rohrs (20) dazu ausgelegt sind, während eines Schweißens zu schmelzen und mit der Tankanordnung (10) zu verschmelzen und den Spalt an dem dreifachen Punkt zu füllen, der inhärent an der Grenzfläche zwischen dem Rohr (20) und dem Paar von Platten (10a, 10b) gebildet wird.

2. Wärmetauscher (100) nach dem vorhergehenden Anspruch, wobei das Rohr (20) durch Laserschweißen mit der Tankanordnung (10) verbunden ist.

3. Wärmetauscher (100) nach einem der vorhergehenden Ansprüche, wobei die Platten (10a) und (10b) durch Stanzen gebildet sind und eine Dicke im Bereich von 0,7 - 0,9 mm aufweisen.

4. Wärmetauscher (100) nach einem der vorhergehenden Ansprüche, wobei die Längswände (20b) und die Kanalwände (22a) eine Dicke im Bereich von 0,2 bis 0,4 mm aufweisen, während die Seitenwände (20a) der äußersten Endabschnitte des Rohrs (20) eine Dicke im Bereich von 0,5 bis 0,6 mm aufweisen.

5. Wärmetauscher (100) nach einem der vorhergehenden Ansprüche, wobei mindestens einer der äußersten Endabschnitte des Rohrs (20) mit einer Rippe auf mindestens einer der Seitenwände (20a) davon gebildet ist.

6. Wärmetauscher (100) nach einem der vorhergehenden Ansprüche, wobei beide äußersten Endabschnitte des Rohrs (20) Seitenwände aufweisen, die vergleichsweise dicker als die Kanalwände (22a) und die Längswände (20b) sind.

7. Wärmetauscher (100) nach einem der vorhergehenden Ansprüche, wobei die Tankanordnung (10) und/oder die äußersten Endabschnitte des Rohrs (20) mit Laschen gebildet sind, um eine Quetschverbindung zwischen der Tankanordnung (10) und den äußersten Endabschnitten des Rohrs (20) zu bilden, wobei die gequetschten Laschen dazu ausgelegt sind, während eines Schweißens zu schmelzen und zu verschmelzen, um den Spalt an dem dreifachen Punkt zu füllen, der inhärent an der Grenzfläche zwischen dem Rohr (20) und dem Paar von Platten (10a, 10b) gebildet wird.

8. Wärmetauscher (100) nach einem der vorhergehenden Ansprüche, wobei das Paar von Platten (10a) und (10b) nach innen gebogene Enden umfasst, die sich von der Tankanordnung (10) zu dem in der Tankanordnung (10) aufgenommenen Rohr (20) hin erstrecken, und dazu ausgelegt ist, während eines Schweißens zu schmelzen und zu verschmelzen, um den Spalt an dem dreifachen Punkt zu füllen, der inhärent an der Grenzfläche zwischen dem Rohr (20) und dem Paar von Platten (10a, 10b) gebildet wird.

9. Wärmetauscher (100) nach einem der vorhergehenden Ansprüche, wobei mindestens einer der äußersten Endabschnitte mindestens eines der Endkanäle (22b) eine nach außen weisende Seitenwand aufweist, die vergleichsweise dicker als die Kanalwände (22a) und die Längswände (20b) ist.

10. Wärmetauscher (100) nach einem der vorhergehenden Ansprüche, wobei das Rohr (20) entweder ein extrudiertes Rohr oder ein gebogenes Rohr ist.

## Revendications

1. Échangeur de chaleur (100) comprenant :
• un ensemble réservoir (10) formé par assemblage d'une paire de panneaux (10a) et (10b) ;
• un tube (20) comprenant une pluralité de canaux (22) et conçu pour être reçu et assemblé à l'ensemble réservoir (10),
**caractérisé en ce qu'**au moins l'une des portions de bout extrêmes du tube (20) a au moins l'une des parois latérales (20a) comparativement plus épaisse que les parois longitudinales (20b) et les parois de canal (22a) du tube (20), et dans lequel des sections plus épaisses des parois latérales (20a) du tube (20) sont conçues pour fondre et fusionner avec l'ensemble réservoir (10) pendant le soudage, et remplir l'espace au niveau du point triple formé de manière inhérente au niveau de l'interface entre le tube (20) et la paire de panneaux (10a, 10b).

2. Échangeur de chaleur (100) selon la revendication précédente, dans lequel le tube (20) est assemblé à l'ensemble réservoir (10) par soudage au laser.

3. Échangeur de chaleur (100) selon l'une quelconque des revendications précédentes, dans lequel les panneaux (10a) et (10b) sont formés par estampage et ont une épaisseur dans la plage de 0,7 à 0,9 mm.

4. Échangeur de chaleur (100) selon l'une quelconque des revendications précédentes, dans lequel les parois longitudinales (20b) et les parois de canal (22a) ont une épaisseur dans la plage de 0,2 à 0,4 mm, tandis que les parois latérales (20a) des portions de bout extrêmes du tube (20) ont une épaisseur dans la plage de 0,5 à 0,6 mm.

5. Échangeur de chaleur (100) selon l'une quelconque des revendications précédentes, dans lequel au moins l'une des portions de bout extrêmes du tube (20) est formée avec une nervure sur au moins l'une de ses parois latérales (20a).

6. Échangeur de chaleur (100) selon l'une quelconque des revendications précédentes, dans lequel les deux portions de bout extrêmes du tube (20) ont des parois latérales comparativement plus épaisses que les parois de canal (22a) et les parois longitudinales (20b).

7. Échangeur de chaleur (100) selon l'une quelconque des revendications précédentes, dans lequel au moins un élément parmi l'ensemble réservoir (10) et des portions de bout extrêmes du tube (20) est formé avec des languettes pour former une connexion de sertissage entre l'ensemble réservoir (10) et des portions de bout extrêmes du tube (20), les languettes serties sont conçues pour fondre et fusionner pendant le soudage afin de remplir l'espace au niveau du point triple formé de manière inhérente au niveau de l'interface entre le tube (20) et la paire de panneaux (10a) et (10b).

8. Échangeur de chaleur (100) selon l'une quelconque des revendications précédentes, dans lequel la paire de panneaux (10a) et (10b) comprend des bouts pliés vers l'intérieur qui s'étendent depuis l'ensemble réservoir (10) vers le tube (20) reçu dans l'ensemble réservoir (10) et est conçue pour fondre et fusionner pendant le soudage pour remplir l'espace au niveau du point triple formé de manière inhérente au niveau de l'interface entre le tube (20) et la paire de panneaux (10a) et (10b).

9. Échangeur de chaleur (100) selon l'une quelconque des revendications précédentes, dans lequel au moins l'une des portions de bout extrêmes d'au moins l'un des canaux de bout (22b) a une paroi latérale orientée vers l'extérieur qui est comparativement plus épaisse que les parois de canal (22a) et les parois longitudinales (20b).

10. Échangeur de chaleur (100) selon l'une quelconque des revendications précédentes, dans lequel le tube (20) est soit un tube extrudé soit un tube coudé.
